# EUROPÄISCHE PATENTANMELDUNG

(11) **EP 3 081 913 A1**
(43) Veröffentlichungstag der Anmeldung: **19.10.2016**
(21) Anmeldenummer: 16160787.4
(22) Anmeldetag: 17.03.2016
(51) Int. Cl.: G01L 19/06, G01L 23/22

(54) **DRUCKMESSVORRICHTUNG UND SCHUTZEINRICHTUNG FÜR EINEN DRUCKSENSOR**

(30) Priorität: 13.04.2015 AT 502872015
(71) Anmelder: Piezocryst Advanced Sensorics GmbH, 8020 Graz (AT)
(72) Erfinder: BAUMGARTNER, Martin, 8522 GROSS ST. FLORIAN (AT); MICHELITSCH, Wolfgang, 8041 GRAZ (AT); KROEGER, Dietmar, 8010 GRAZ (AT)
(74) Vertreter: Babeluk, Michael

(57) **Zusammenfassung**

Die Erfindung betrifft eine Vorrichtung für Druckmessungen in einem Brennraum (10), mit einem in der Zugangsbohrung (13) einer Brennraumbegrenzung (11) angeordneten Drucksensor (1) mit einer Sensormembran (2), wobei die Sensormembran (2) über eine Indizierbohrung (12) in der Brennraumbegrenzung (11) mit dem Brennraum (10) in Verbindung steht. Zum Schutz vor Superklopf- bzw. Mega-Knock-Ereignissen ist vor der Sensormembran (2) des Drucksensors (1) eine Schutzeinrichtung (3) angeordnet, welche ein Steuerelement (4, 5, 20) aufweist, das ab einer vorgegebenen Druckschwelle den Gaszutritt zur Sensormembran (2) des Drucksensors (1) verringert und/oder unterbindet.

## Beschreibung

Die Erfindung betrifft eine Vorrichtung für Druckmessungen in einem Brennraum, mit einem in der Zugangsbohrung einer Brennraumbegrenzung angeordneten Drucksensor mit einer frontseitigen Sensormembran, wobei die Sensormembran über eine Indizierbohrung in der Brennraumbegrenzung mit dem Brennraum in Verbindung steht, sowie eine Schutzeinrichtung zur frontseitigen Anbringung an einen in eine Zugangsbohrung einer Brennraumbegrenzung einsetzbaren Drucksensor.

Bei modernen Otto-Motoren kann es insbesondere in Verbindung mit einer Hochaufladung zu einer verstärkten Neigung zur Vorentflammung bzw. Glühzündung kommen. Als Vorentflammung wird eine irreguläre Verbrennung bezeichnet, bei der es bereits vor Einleitung der Zündung mittels einer Zündkerze zur explosionsartigen Verbrennung von Teilen des Kraftstoff-Luftgemisches im Brennraum kommen kann. Derartige auch Superklopfen bzw. Mega-Knock-Events genannte Ereignisses gehen in der Regel mit einem derart stark erhöhten Brennraumdruck einher, dass Schäden an der Verbrennungskraftmaschine auftreten können. Weiters können auch im Motor verbaute Drucksensoren zerstört werden, was insbesondere im Rahmen von Versuchsanordnungen oder beim Prüfstandstest Probleme aufwirft, da bereits bei einem einmaligen Auftreten eines Superklopf-Ereignisses die Sensoreinrichtung zerstört sein kann.

Das Problem des Superklopfens wird beispielsweise in der EP 2 652 295 B1 angesprochen, wobei hier ein Verfahren zur Erkennung von irregulären Verbrennungsvorgängen vorgeschlagen wird. Im beschriebenen Verfahren wird der Druck mit Hilfe eines Drucksensors gemessen, der in der Kraftstoffzuleitung (z.B. Common Rail) der Brennkraftmaschine angeordnet ist. Nähere Angaben zum Aufbau des Drucksensors bzw. zu dessen Schutz vor Druckspitzen, ausgelöst durch Mega-Knock-Events werden allerdings nicht dargelegt.

Mit derselben Problematik setzt sich die DE 10 2012 219 353 B3 auseinander, die ein Berechnungs- und Prognoseverfahren von Klopf- und Superklopfvorgängen, insbesondere in Ottomotoren, zum Gegenstand hat. Es werden allerdings lediglich Verfahren zur Bestimmung einer lokalen Wahrscheinlichkeit für das Auftreten von Superklopf-Vorgängen beschrieben, nicht allerdings Maßnahmen zum Schutz allfälliger Drucksensoren. Ein ähnlicher Sachverhalt wird in der DE 10 210 003 305 A1 beschrieben.

In der WO 2010/124 699 A1 wird ein Verfahren zur Unterdrückung einer irregulären Verbrennung in einem Brennraum einer Verbrennungskraftmaschine beschrieben. Gemäß einer Ausführungsvariante kann der Drucksensor zur Erfassung des Druckes im Brennraum in einer Glühkerze angeordnet sein.

Aus der EP 2 440 900 B1 ist es zwar bekannt, ein Schutzelement zum Schutz einer vom Druck beaufschlagten Membran eines Drucksensors frontseitig der Membran anzuordnen, das Schutzelement ist allerdings als Thermoschutzelement optimiert und weist schmale, parallel verlaufende Lamellen auf, die ca. 40% bis 60% der Membranfläche abdecken. Weiters weisen die Lamellen eine relativ große Querschnittshöhe im Vergleich zur Querschnittsbreite auf, um bei allen Betriebszuständen ein wirksames Erlöschen der vom Brennraum einer Brennkraftmaschine ausgehenden Flammenfront zu erreichen. Beim Superklopfen auftretenden Druckspitzen können allerdings durch ein derartiges Thermoschutzelement nicht wirksam von der Sensormembran fern gehalten werden.

Aufgabe der Erfindung ist es, eine Vorrichtung für Druckmessungen in einem Brennraum vorzuschlagen, mit welcher der in eine Zugangsbohrung einer Brennraumbegrenzung eingesetzte Drucksensor wirksam von Druckspitzen ausgelöst durch Superklopfereignisse geschützt werden kann.

Erfindungsgemäß wird diese Aufgabe dadurch gelöst, dass vor der Sensormembran des Drucksensors eine Schutzeinrichtung angeordnet ist, welche ein Steuerelement aufweist, das ab einer vorgegebenen Druckschwelle den Gaszutritt zur Sensormembran des Drucksensors verringert und/oder unterbindet. Durch die erfindungsgemäße Vorrichtung kann die Sensorempfindlichkeit unterhalb der vorgebbaren Druckschwelle unverändert aufrecht erhalten werden, wobei bei einem Überschreiten der Druckschwelle - ausgelöst durch den Druckstoß - ein Steuerelement wirksam wird, das den Druckanstieg sowie den maximalen Druck an der Sensormembran senkt und den Drucksensor vor Überlastung schützt.

Erfindungsgemäß ist in der Schutzeinrichtung ein zur Sensormembran führender Gaswechselkanal ausgebildet, von welchem ein Entlastungskanal abzweigt, in welchem das beim Überschreiten einer vorgegebenen Druckschwelle öffnende Steuerelement angeordnet ist.

Erfindungsgemäß kann auch direkt im Gaswechselkanal ein beim Überschreiten einer vorgegebenen Druckschwelle schließendes Steuerelement, beispielsweise eine Druckklappe, angeordnet sein.

Gemäß einer, vorteilhaften Ausführungsvariante der Erfindung ist das im Entlastungskanal vorliegende Steuerelement als Überdruckventil oder Druckklappe ausgebildet, welches durch Federkraft, beispielsweise einer Tellerfeder, in Schließstellung gehalten wird.

Gemäß einer weiteren, vorteilhaften Ausführungsvariante ist das Steuerelement als eine an der Schutzeinrichtung dichtend anliegende Hülse ausgebildet, die den zumindest einen Entlastungskanal abdeckt und beim Überschreiten einer vorgegebenen Druckschwelle durch elastische Verformung einen randseitigen Spalt zum Druckabbau ausbildet.

Schließlich kann das Steuerelement als ein vom Druck im Entlastungskanal beaufschlagter, federbelasteter Steuerkolben oder Steuerschieber ausgeführt sein, mit welchem ein im Gaswechselkanal angeordnetes Blendenelement beim Überschreiten einer vorgebbaren Druckschwelle von einer Offenstellung in eine Schließstellung bringbar ist.

Die Erfindung wird im Folgenden anhand von Ausführungsbeispielen näher erläutert. Es zeigen:
- Fig. 1: ein Diagramm des Brennraumdruckes, bei welchem auf der Abszisse der Kurbelwinkel K in Grad und auf der Ordinate der Druck p im Brennraum aufgetragen sind;
- Fig. 2: eine Übersichtsdarstellung der erfindungsgemäßen Vorrichtung für die Druckmessung, teilweise geschnitten;
- Fig. 3: und Fig. 4 Subvarianten einer ersten Ausführungsvariante der Erfindung in einer Schnittdarstellung gemäß Fig. 2;
- Fig. 3a: eine Schnittdarstellung einer zweiten Ausführungsvariante der Erfindung in einer Detailansicht;
- Fig. 4a: eine Schnittdarstellung einer dritten Ausführungsvariante der Erfindung in einer Detailansicht; sowie
- Fig. 5: und Fig. 6 eine vierte Ausführungsvariante der Erfindung in unterschiedlichen Betriebsstellungen in einer Schnittdarstellung gemäß Fig. 2.

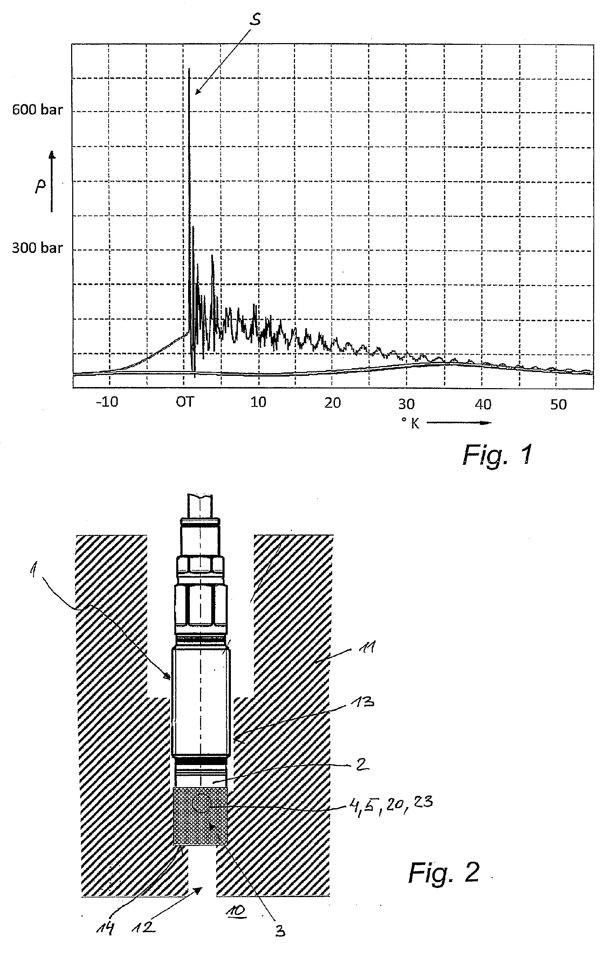

In Fig. 1 ist in einem Druckdiagramm ein Superklopf- bzw. Mega-Knock-Ereignis dargestellt, das einen extrem kurzen, sehr hohen (größer 500 bar) Druckstoß zeigt, der herkömmliche Drucksensoren zerstören kann.

Eine erfindungsgemäße Vorrichtung für die Druckmessung in einem Brennraum 10 ist in einer Übersichtsdarstellung in Fig. 2 dargestellt. In der Brennraumbegrenzung 11 ist eine Zugangsbohrung 13 mit einem Innengewinde angeordnet, die sich nach einer Schulter 14 in eine zum Brennraum 10 führende Indizierbohrung 12 verengt. In die Messbohrung bzw. Zugangsbohrung 13 ist ein Drucksensor 1 eingesetzt, wobei ein hier nicht weiter dargestelltes Außengewinde des Drucksensors 1 in das Innengewinde der Zugangsbohrung 13 eingreift.

Der Drucksensor 1 kann allerdings auch in eine Zündkerze, einen Injektor oder einen Glühstift integriert sein und mit diesem in eine entsprechende Zugangsbohrung eingesetzt werden.

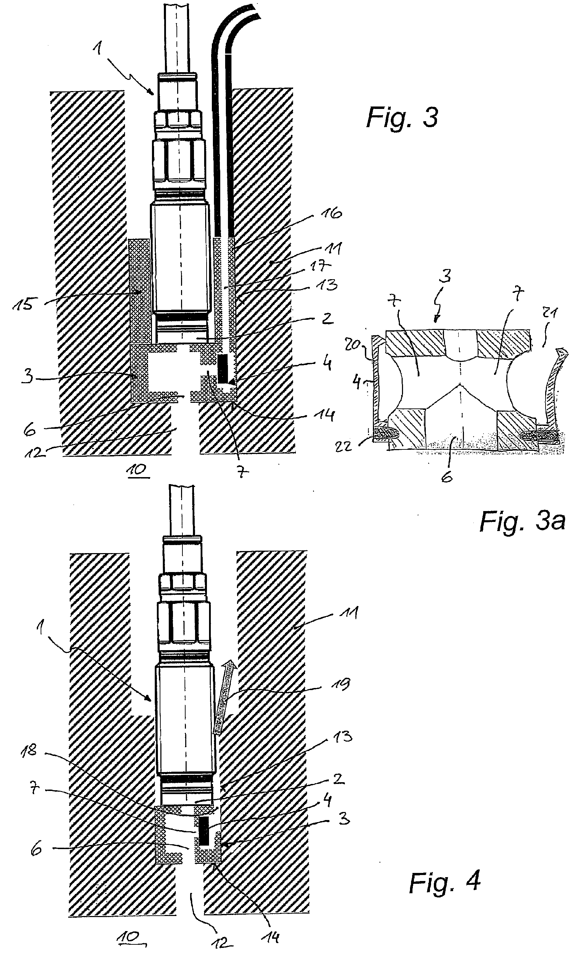

Der Drucksensor 1 weist frontseitig eine Sensormembran 2 auf, die durch eine vor der Sensormembran 2 angeordnete Schutzeinrichtung 3 vor Druckstößen geschützt ist. In der Schutzeinrichtung 3 ist ein Steuerelement 4, 5, 20 bzw. 23 angeordnet, das ab einer vorgegebenen Druckschwelle den Gaszutritt zur Sensormembran 2 verringert oder zur Gänze unterbindet. Ausführungsbeispiele dazu sind in den nachfolgenden Figuren 3 bis 6 dargestellt.

Bei einigen Ausführungsvarianten ist in der Schutzeinrichtung 3 ein zur Sensormembran 2 führender Gaswechselkanal 6 ausgebildet, von welchem ein oder mehrere Entlastungskanäle 7 abzweigen, in oder an welchen das bei Überschreiten einer vorgebbaren Druckschwelle öffnende Steuerelement 4, 5 oder 20 angeordnet ist.

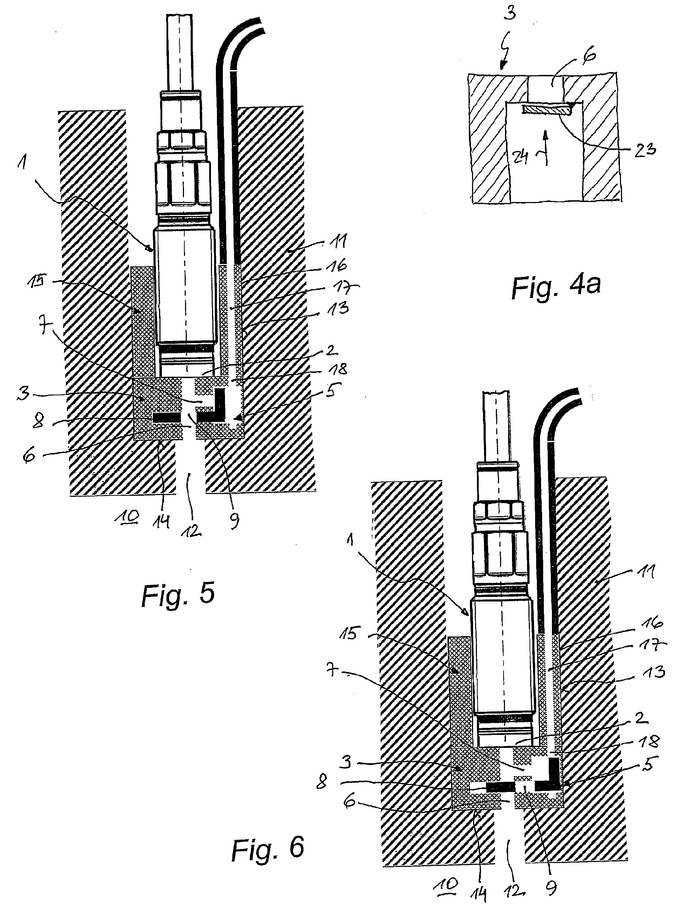

Dieses Steuerelement ist beispielsweise bei der Ausführungsvariante gemäß Fig. 3 bzw. Fig. 4 als Überdruckventil oder Druckklappe 4 ausgebildet und wird durch die Federkraft eines hier nicht weiter dargestellten Federelementes (z.B. eine Tellerfeder) in Schließstellung gehalten. Durch dieses Federelement wird auch die Druckschwelle vorgegeben, ab der die Druckklappe 4 öffnet. Das Öffnen erfolgt ab einem Druck deutlich unter dem Überlastungsdruck des Drucksensors 1 und baut einen Teil des Druckanstieges durch Abblasen einer Teilgasmenge ab. Dadurch wird der Druckanstieg sowie der maximale Druck an der Sensormembran 2 gesenkt und der Sensor 1 kann nicht überlastet werden. Weiters kann die einströmende Gasmenge durch eine Verengung des Gaswechselkanals 6 gesteuert werden.

In der Ausführungsvariante gemäß Fig. 3 weist der Drucksensor 1 eine hülsenartige Halterung 15 auf, mit deren Hilfe er in der Zugangsbohrung 13 befestigt ist. In der Wand 16 der hülsenförmigen Halterung 15 ist ein Abblasekanal 17 angeordnet, der zur Abfuhr der durch das Steuerelement 4 abgesteuerten Gasmenge nach außen dient.

Bei der Ausführungsvariante gemäß Fig. 3a ist das Steuerelement als eine an der Schutzeinrichtung 3 dichtend anliegende Hülse 20 ausgebildet, die den zumindest einen Entlastungskanal 7 abdeckt und beim Überschreiten einer vorgegebenen Druckschwelle durch elastische Verformung einen randseitigen Spalt 21 ausbildet. Die Hülse 20, beispielsweise eine elastische Rohrfeder aus Stahl, kann z.B. am unteren Rand 22 mit dem zylindrischen Körper der Schutzeinrichtung 3 verschweißt sein, sodass sich der obere Rand bei einem Druckpuls eines Mega-Knock-Ereignisses elastisch abhebt und einen ringförmigen Spalt 21 ausbildet (siehe überhöhte Darstellung, rechte Seite in Fig. 3a), durch welchen die abgesteuerte Gasmenge austreten kann. Nach dem Druckabfall schließt die Hülse 20 wieder.

Wie in der Ausführungsvariante gemäß Fig. 4 dargelegt, kann auf die hülsenartige Halterung auch verzichtet werden, wenn die Schutzeinrichtung 3 ausgangsseitig des Steuerelementes 4 eine Gasaustrittsöffnung 18 aufweist, die eine Strömungsverbindung in den Gewindespalt zwischen dem Gehäuse des Drucksensors 1 und der Zugangsbohrung 13 herstellt. Die abgesteuerte Gasmenge der Druckspitze kann dann die Zugangsbohrung 13 wie mit Pfeil 19 angedeutet, verlassen.

In der Ausführungsvariante gemäß Fig. 4a ist in der Schutzeinrichtung 3 ein zur Sensormembran 2 führender Gaswechselkanal 6 ausgebildet, in welchem ein beim Überschreiten einer vorgegebenen Druckschwelle schließendes Steuerelement, beispielsweise eine Druckklappe 23, angeordnet ist. Die Druckklappe 23 kann als Tellerfeder ausgebildet sein, die beim Auftreffen eines Druckpulses (siehe Pfeil 24) schließt und aufgrund deren Eigenelastizität bei Druckabfall wieder öffnet.

In der in den Fig. 5 und Fig. 6 dargestellten Ausführungsvariante der Erfindung ist das Steuerelement als ein vom Druck im Entlastungskanal 7 beaufschlagter, federbelasteter Steuerkolben oder Steuerschieber 5 ausgeführt, mit welchem ein im Gaswechselkanal 6 angeordnetes Blendenelement 8 verbunden ist, das beim Überschreiten der vorgegebenen Druckschwelle von einer Offenstellung (siehe Fig. 5) in eine Schließstellung (siehe Fig. 6) bringbar ist. Das Blendenelement 8 weist eine zentrale Öffnung 9 auf, die in der Offenstellung mit dem Gaswechselkanal 6 fluchtet und in der Geschlossenstellung gemäß Fig. 6 den Gaswechselkanal 6 verschließt. Der Steuerschieber 5 öffnet somit ab einem Druck deutlich unter dem Überlastungsdruck des Sensors 1 den Entlastungskanal 7 und verschließt gleichzeitig den Gaswechselkanal 6. Zur Abfuhr der durch das Steuerelement 5 abgesteuerten Gasmenge dient ein Abblasekanal 17, der in der hülsenartigen Halterung 15 des Drucksensors 1 angeordnet ist.

Die Schutzeinrichtung 3 kann separat in die Messbohrung bzw. Zugangsbohrung 13 der Brennraumbegrenzung 11 eingesetzt werden, es ist allerdings auch möglich, dass die Schutzeinrichtung 3 am frontseitigen Ende des Drucksensors 1 befestigt ist. Vorteilhafterweise kann diese dann gemeinsam mit dem Drucksensor 1 in der Zugangsbohrung 13 montiert bzw. aus der Zugangsbohrung 13 demontiert werden.

In den einzelnen Ausführungsvarianten wird die Schutzeinrichtung 3 durch den in die Zugangsbohrung 13 bzw. in die hülsenartige Halterung 15 eingeschraubten Drucksensor 1 dichtend an die Schulter 14 in der Zugangsbohrung 13 angepresst.

Eine Schutzeinrichtung zur frontseitigen Anbringung an einen in eine Zugangsbohrung 13 einer Brennraumbegrenzung 11 einsetzbaren Drucksensor 1 mit einer frontseitigen Sensormembran 2, zeichnet sich somit erfindungsgemäß dadurch aus, dass die Schutzeinrichtung 3 ein Steuerelement 4, 5, 20, 23 aufweist, das ab einer vorgegebenen Druckschwelle den Gaszutritt zur Sensormembran 2 des Drucksensors 1 verringert und/oder unterbindet.

## Patentansprüche

1. Vorrichtung für Druckmessungen in einem Brennraum (10), mit einem in einer Zugangsbohrung (13) einer Brennraumbegrenzung (11) angeordneten Drucksensor (1) mit einer Sensormembran (2), wobei die Sensormembran (2) über eine Indizierbohrung (12) in der Brennraumbegrenzung (11) mit dem Brennraum (10) in Verbindung steht, **dadurch gekennzeichnet, dass** vor der Sensormembran (2) des Drucksensors (1) eine Schutzeinrichtung (3) angeordnet ist, welche ein Steuerelement (4, 5, 20, 23) aufweist, das ab einer vorgegebenen Druckschwelle den Gaszutritt zur Sensormembran (2) des Drucksensors (1) verringert und/oder unterbindet.

2. Vorrichtung nach Anspruch 1, **dadurch gekennzeichnet, dass** in der Schutzeinrichtung (3) ein zur Sensormembran (2) führender Gaswechselkanal (6) ausgebildet ist, in welchem ein beim Überschreiten einer vorgegebenen Druckschwelle schließendes Steuerelement, beispielsweise eine Druckklappe (23), angeordnet ist.

3. Vorrichtung nach Anspruch 1, **dadurch gekennzeichnet, dass** in der Schutzeinrichtung (3) ein zur Sensormembran (2) führender Gaswechselkanal (6) ausgebildet ist, von welchem zumindest ein Entlastungskanal (7) abzweigt, in oder an welchem ein beim Überschreiten einer vorgegebenen Druckschwelle öffnendes Steuerelement (4, 5, 20) angeordnet ist.

4. Vorrichtung nach Anspruch 3, **dadurch gekennzeichnet, dass** das Steuerelement als Überdruckventil oder Druckklappe (4) ausgebildet ist und durch Federkraft in Schließstellung gehalten ist.

5. Vorrichtung nach Anspruch 3, **dadurch gekennzeichnet, dass** das Steuerelement als eine an der Schutzeinrichtung (3) dichtend anliegende Hülse (20) ausgebildet ist, die den zumindest einen Entlastungskanal (7) abdeckt und beim Überschreiten einer vorgegebenen Druckschwelle durch elastische Verformung einen randseitigen Spalt (21) ausbildet.

6. Vorrichtung nach einem der Anspruch 3, **dadurch gekennzeichnet, dass** das Steuerelement als ein vom Druck im Entlastungskanal (7) beaufschlagter, federbelasteter Steuerkolben oder Steuerschieber (5) ausgeführt ist, mit welchem ein im Gaswechselkanal (6) angeordnetes Blendenelement (8) beim Überschreiten einer vorgegebenen Druckschwelle von einer Offenstellung in eine Schließstellung bringbar ist.

7. Vorrichtung nach einem der Ansprüche 1 bis 6, **dadurch gekennzeichnet, dass** der Drucksensor (1) mit Hilfe einer hülsenartigen Halterung (15) in der Zugangsbohrung (13) befestigt ist, wobei in der Wand (16) der hülsenförmigen Halterung ein Abblasekanal (17) angeordnet ist, der zur Abfuhr der durch das Steuerelement (4, 5, 20) abgesteuerten Gasmenge dient.

8. Vorrichtung nach einem der Ansprüche 1 bis 6, **dadurch gekennzeichnet, dass** in der Schutzeinrichtung (3) ausgangsseitig des Steuerelementes (4, 5, 20) eine Gasaustrittsöffnung (18) angeordnet ist, die eine Strömungsverbindung in den Gewindespalt zwischen dem Gehäuse des Drucksensors (1) und der Zugangsbohrung (13) herstellt.

9. Messvorrichtung nach einem der Ansprüche 1 bis 8, **dadurch gekennzeichnet, dass** die Schutzeinrichtung (3) an einer Schulter (14) in der Zugangsbohrung (13) dichtend anliegt.

10. Messvorrichtung nach einem der Ansprüche 1 bis 9, **dadurch gekennzeichnet, dass** die Schutzeinrichtung (3) am frontseitigen Ende des Drucksensors (1) befestigt ist.

11. Schutzeinrichtung (3) zur frontseitigen Anbringung an einen in eine Zugangsbohrung (13) einer Brennraumbegrenzung (11) einsetzbaren Drucksensor (1) mit einer Sensormembran (2), **dadurch gekennzeichnet, dass** die Schutzeinrichtung (3) ein Steuerelement (4, 5, 20, 23) aufweist, das ab einer vorgegebenen Druckschwelle den Gaszutritt zur Sensormembran (2) des Drucksensors (1) verringert und/oder unterbindet.

12. Schutzeinrichtung (3) nach Anspruch 11, **dadurch gekennzeichnet, dass** in der Schutzeinrichtung (3) ein zur Sensormembran (2) führender Gaswechselkanal (6) ausgebildet ist, von welchem zumindest ein Entlastungskanal (7) abzweigt, in oder an welchem das beim Überschreiten einer vorgegebenen Druckschwelle öffnende Steuerelement (4, 5, 20, 23) angeordnet ist.

13. Schutzeinrichtung (3) nach Anspruch 11, **dadurch gekennzeichnet, dass** in der Schutzeinrichtung (3) ein zur Sensormembran (2) führender Gaswechselkanal (6) ausgebildet ist, in welchem ein beim Überschreiten einer vorgegebenen Druckschwelle schließendes Steuerelement, beispielsweise eine Druckklappe (23), angeordnet ist.
